Europäisches Patentamt

European Patent Office

Office européen des brevets

(19)

(11) EP 0 564 322 B1

(12) FASCICULE DE BREVET EUROPEEN

(45) Date de publication et mention
de la délivrance du brevet:
**21.08.1996 Bulletin 1996/34**

(51) Int Cl.⁶: **G01S 13/78**

(21) Numéro de dépôt: 93400736.0

(22) Date de dépôt: 22.03.1993

(54) **Procédé et dispositif de détection de mélanges d'impulsions reçues par un radar secondaire**

Verfahren und Gerät zur Erkennung von vermischten Impulsen durch ein
Sekundär-Überwachungsradar

Method and apparatus for garble detection in a secondary surveillance radar

(84) Etats contractants désignés:
**DE FR GB IT**

(30) Priorité: **31.03.1992 FR 9203868**

(43) Date de publication de la demande:
**06.10.1993 Bulletin 1993/40**

(73) Titulaire: **THOMSON-CSF**
**75008 Paris (FR)**

(72) Inventeurs:
- **Billaud, Jean, THOMSON-CSF**
  **F-92402 Courbevoie Cedex (FR)**
- **De Volder, Claude, THOMSON-CSF**
  **F-92402 Courbevoie Cedex (FR)**
- **Wybierala, Michel, THOMSON-CSF**
  **F-92402 Courbevoie Cedex (FR)**

(74) Mandataire: **Benoit, Monique et al**
**THOMSON-CSF**
**SCPI**
**B.P. 329**
**50, rue Jean-Pierre Timbaud**
**92402 Courbevoie Cédex (FR)**

(56) Documents cités:
EP-A- 0 426 543          GB-A- 2 021 895
US-A- 3 732 563

- **ALTA FREQUENZA vol. 52, no. 5, Septembre
  1983, MILANO, IT pages 350 - 364 BENELLI ET
  AL: 'ANGLE ESTIMATION AND
  DISCRIMINATION OF MONOPULSE SSR
  REPLIES IN THE PRESENCE OF
  SYNCHRONOUS INTERFERENCE'**

## Description

La présente invention concerne un procédé et un dispositif de détection de mélanges d'impulsions reçues par un radar secondaire. Elle s'applique notamment aux radars secondaires recevant des réponses impulsionnelles de plusieurs avions à la fois.

Le trafic aérien devenant de plus en plus dense, les impulsions émises par les transpondeurs des avions et destinées aux radars secondaires au sol entrent en confusion en créant des mélanges d'impulsions reçues encore appelés "garbling" selon la terminologie anglo-saxonne. Ces garbling induisent de faux codes au niveau des circuits de réception et de traitement des radars secondaires, ce qui ne permet pas d'identifier les avions ou leurs positions par exemple, entraînant par là même de graves conséquences pour la sécurité du trafic aérien.

La détection de présence d'une impulsion d'une réponse secondaire émise par un avion, est généralement réalisée au niveau d'un signal quantifié noté QΣ dont l'état haut indique le passage à mi-amplitude du signal reçu par la voie somme, notée Σ, de l'antenne du radar secondaire. Le traitement du radar secondaire exploite uniquement ce type d'information, d'une part pour détecter une réponse, en particulier les deux impulsions connues et standardisées F1 et F2 séparées de 20,3 μs et encadrant la réponse, et d'autre part pour détecter le code de la réponse ayant la forme d'une succession d'impulsions. En conséquence, tout le traitement secondaire n'exploite que la présence d'une puissance haute fréquence contenue dans des impulsions de durée normalisée égale à 450 ns séparées entre elles par un espacement normalisé multiple de 1,45 μs. Chaque impulsion véhicule une information binaire, par conséquent, si sa puissance dépasse un certain seuil fonction des impulsions de référence F1 ou F2, cette information sera par exemple égale à 1, et égale à 0 dans le cas contraire. La puissance émise par les transpondeurs des avions est généralement, à la réception, transposée dans le domaine des fréquences dites intermédiaires, typiquement de l'ordre de 60 MHz, puis détectée à travers des amplficateurs limiteurs logarithmiques dont le but est notamment d'absorber la grande dynamique de puissance reçue et d'éviter par exemple la saturation des circuits de traitement.

En cas de "garbling" entre deux impulsions reçues par un radar secondaire, les méthodes d'analyse selon l'art antérieur, notamment les systèmes d'analyse de la puissance du signal QΣ, ne révèlent pas l'existence de deux impulsions mélangées lorsque la différence de puissance entre celles-ci est inférieure par exemple à 6 dB, c'est-à-dire que la puissance de l'une n'est pas au moins égale au double de l'autre; on effectue alors des erreurs de détection en durée et en position des deux impulsions mélangées. Un procédé et un dispositif de détection de mélange d'impulsions reçus par un radar secondaire utilisant une analyse du signal quantifié QΣ sont connus du document EP-A-426543.

Le but de l'invention est de pallier les inconvénients précités notamment en s'affranchissant des niveaux de puissance mis en jeu.

A cet effet, l'invention a pour objet un procédé de détection de mélanges d'impulsions reçues par un radar secondaire à antenne de réception monopulse permettant d'obtenir un signal impulsionnel de puissance et un signal impulsionnel d'écartométrie synchrones des impulsions reçues , caractérisé en ce qu'il consiste à détecter à la fois des ondulations superposées au signal de puissance et des ondulations superposées au signal d'écartométrie, la présence d'au moins deux impulsions mélangées étant détectée par la présence d'ondulations sur au moins un des deux signaux

L'invention a également pour objet un dispositif pour la mise en oeuvre du procédé précité.

L'invention a pour principaux avantages qu'elle permet de détecter la réception d'impulsions mélangées indépendamment des niveaux de puissance ou des écarts d'azimut des transpondeurs, qu'elle est simple à mettre en oeuvre et qu'elle est économique.

D'autres caractéristiques et avantages de l'invention apparaîtront à l'aide de la description qui suit, faite en regard des dessins annexés qui représentent:

- la figure 1a, une impulsion standard reçue;
- la figure 1b, le mélange de deux impulsions reçues;
- la figure 2, un cas où deux transpondeurs émettent des signaux de réponse vers un même radar;
- la figure 3, un synoptique d'un mode de réalisation possible d'un dispositif pour la mise en oeuvre du procédé selon l'invention ;
- la figure 4, un principe possible d'échantillonnage d'impulsions.

La figure 1a représente le niveau de puissance d'une impulsion standard 1 reçue par des circuits de réception, notamment par la voie somme notée Σ de l'antenne monopulse, d'un radar secondaire. Des droites 2, 3 délimitent la moitié de la puissance contenue dans l'impulsion 1. Exprimé en données logarithmiques, le niveau de puissance défini par la droite inférieure 3 est diminué de 6 dB par rapport au niveau maximal de puissance défini par la droite supérieure 2. La courbe 4, notée généralement QΣ, est une détection de l'amplitude moitié de l'impulsion 1 reçue, c'est-à-dire de la puissance maximale diminuée de 6 dB.

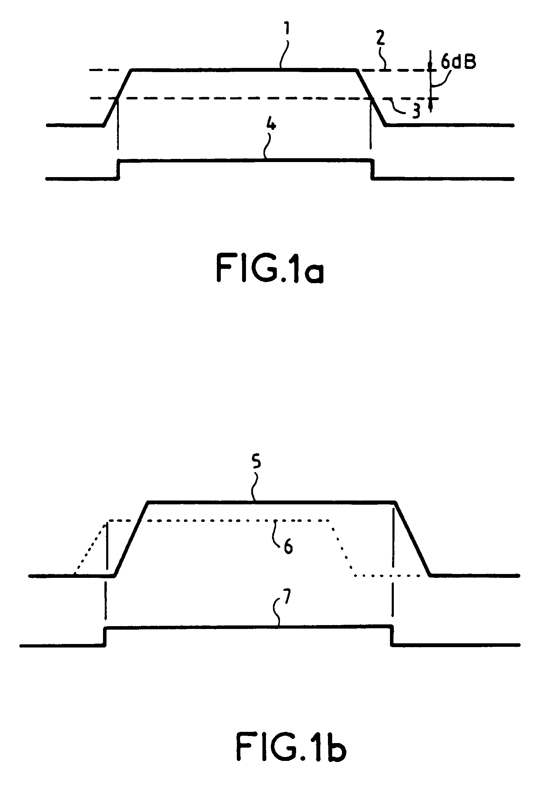

La figure 1b présente un exemple de "garbling" où deux impulsions 5, 6 émises par exemple par deux avions différents, se mélangent pour donner un signal composite, à l'entrée des circuits de réception d'un radar secondaire.

Si la différence de puissance entre les deux impulsions 5, 6 est inférieure à 6 dB par exemple, le signal 7 détectant la moitié de puissance des signaux reçus ne différencie pas ces deux impulsions 5, 6.

Les antennes de réception utilisées dans les radars secondaires sont généralement monopulses et contiennent donc une voie somme notée $\Sigma$ et une voie différence notée $\Delta$. La voie $\Sigma$ est essentiellement utilisée pour recevoir la puissance du signal émis par le transpondeur d'un avion et donc pour détecter la réponse et le code contenus dans ce signal. La voie $\Delta$ est utilisée avec la voie $\Sigma$ pour former une tension, rapport du signal reçu par la voie $\Delta$ sur le signal reçu par la voie $\Sigma$, liée au dépointage de l'avion par rapport à l'axe de l'antenne du radar secondaire. Cette tension sert donc pour déterminer précisément l'azimut de la cible.

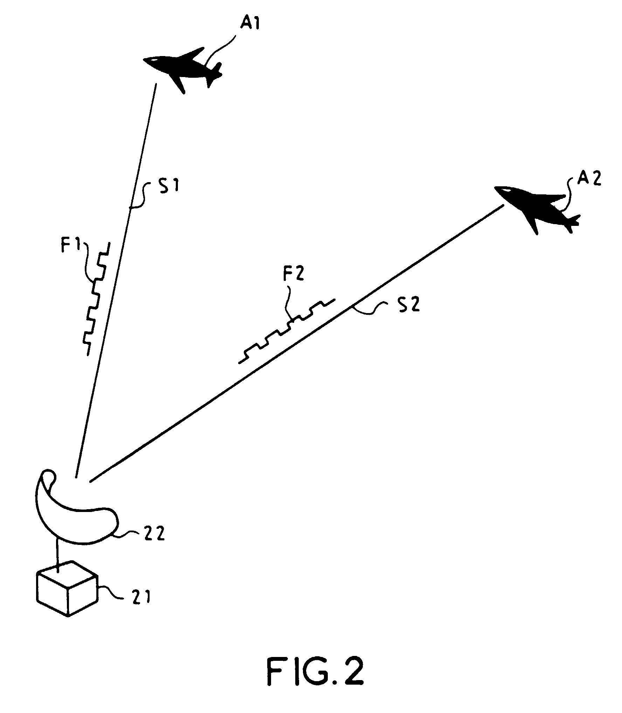

La figure 2 représente un cas où les transpondeurs de deux avions A1, A2 émettent des signaux de réponse S1, S2 vers l'antenne 22 d'un radar 21. L'avion A1 fournit par exemple le signal S1 de puissance P1, de fréquence F1 et de phase $\phi$1, de même, l'avion A2 fournit le signal S2 de puissance P2, de fréquence F2 et de phase $\phi$2.

Les fréquences F1, F2 sont généralement comprises dans une bande de 6 MHz centrée autour de la fréquence de 1090 MHz. Au niveau des circuits de réception du radar secondaire, ces fréquences sont transposées dans le domaine des fréquences dites intermédiaires par exemple 60 MHz. Les signaux transposés en fréquence intermédiaire attaquent par exemple des amplificateurs logarithmiques de manière connue de l'homme de l'art. Dans le cas d'un "garbling", le signal à l'entrée de ces amplificateurs logarithmiques est composite et peut se noter :

$$s(t) = W_1 \, Cos \, (2\pi \, F1 \, t + \phi1) + W_2 \, Cos \, (2\pi \, F2 \, t + \phi2) \tag{1}$$

où W1 et W2 reflètent l'énergie reçue sur la voie somme $\Sigma$ de l'antenne de réception du radar secondaire. W1 et W2 tiennent compte des puissances P1 et P2 des signaux S1, S2 mais aussi des azimuts $\theta$1, $\theta$2 des avions A1, A2.

La voie de traitement du signal composite s(t) contient par exemple à sa sortie un mélangeur, ramenant le signal dans sa bande de fréquence initiale; ce mélangeur délivre un signal impulsionnel noté Log $\Sigma$ (t). Les calculs et les expériences de la déposante ont montré que l'amplitude de ce signal pouvait s'écrire de la manière suivante :

$$\text{Amplitude Log}\Sigma(t) = \frac{W1^2 + W2^2}{2} \, Cos \, \phi + W1W2 \, Cos \, \phi \, Cos \, (2\pi(F1\text{-}F2)t) \tag{2}$$

dans le cas où $\phi$1 = $\phi$2 = $\phi$. Néanmoins, cette relation (2) donne une bonne approximation du signal obtenu en sortie de la voie de traitement, quelque soient les phases $\phi$1 et $\phi$2. Outre une composante continue reflétant la puissance du signal reçu, un battement à la fréquence F1-F2 apparaît. Ce battement n'est en fait pas sinusoïdal, à cause notamment de la non-linéarité des circuits et du fait que les produits d'intermodulation d'un mélangeur ne s'arrêtent pas à l'ordre 1. Néanmoins, si le battement ne constitue pas une sinusoïde pure mais un signal alternatif se superposant à la composante continue, il constitue dans certains cas une bonne représentation du phénomène réel de "garbling", par exemple dans les cas où l'écart de puissance entre les deux signaux S1 et S2 est important, par exemple, de l'ordre de 10 dB. Cet écart se traduit en effet par une ondulation crête à crête de 3 dB sur le signal de sortie Log $\Sigma$(t).

Au lieu d'exploiter le signal de la voie somme $\Sigma$, Log$\Sigma$(t), indiquant la puissance, selon l'invention il est possible d'exploiter le signal d'écartométrie noté $\Delta/\Sigma$ (t), connu de l'homme de l'art, représentant le rapport des signaux issus de la voie différence $\Delta$ et de la voie somme $\Sigma$. En cas de "garbling", il apparaît encore dans l'expression de $\Delta/\Sigma$ une composante de battement à la fréquence F1-F2 mais dans ce cas, l'amplitude du battement est plus complexe à définir. Elle dépend des puissances reçues sur les voies somme $\Sigma$ et différence $\Delta$, de l'action des circuits de réception, notamment de limiteurs, et de l'écart entre les azimuts $\theta$1 et $\theta$2 des deux avions.

Selon l'invention, pour détecter les mélanges d'impulsions reçues par les radars secondaires, il apparaît donc possible d'exploiter à la fois le signal Log $\Sigma$ (t) et le signal $\Delta/\Sigma$ (t). Dans le cas du traitement du signal Log $\Sigma$ (t), l'ondulation observée sur ce signal est d'autant plus forte que les signaux reçus par la voie somme $\Sigma$ sont de même puissance et ont des fréquences F1 et F2 différentes. Une analyse de forme du signal Log $\Sigma$ (t) détectant des variations d'amplitude est donc performante dans le cas par exemple où les signaux de réponse S1, S2 envoyés par les deux avions A1, A2 ont des bilans énergétiques sensiblement égaux et que leur écart de fréquence est élevé indépendamment d'autres paramètres. De même, il apparaît qu'une analyse de forme du signal $\Delta/\Sigma$ (t) détectant des variations d'amplitude est particulièrement performante dans le cas où les signaux de réponse S1, S2 des deux avions A1, A2 ont des bilans énergétiques différents et dont l'écart en fréquence est important ainsi que l'écart entre les azimuts $\theta$1 et $\theta$2 des deux avions.

Le procédé selon l'invention consiste donc à analyser les signaux impulsionnels Log $\Sigma$ (t) et $\Delta/\Sigma$ (t) de la manière suivante; si des ondulations apparaissent sur ces signaux, cela signifie l'existence d'au moins deux impulsions reçues par le radar secondaire ; en l'absence d'ondulations, cela signifie qu'une seule impulsion est reçue. La détection d'ondulations dans les impulsions Log $\Sigma$ (t) et $\Delta/\Sigma$ (t) se fera par exemple par leur échantillonnage. Plusieurs échantillons étant relevés à l'intérieur de l'impulsion, l'incapacité de trouver un état stable ou une convergence des valeurs des échantillons à l'intérieur d'une certaine fourchette, en d'autres termes, l'absence de reproduction d'une même valeur indiquera l'existence d'ondulations donc d'au moins deux impulsions reçues et mélangées. Les signaux impulsionnels Log Σ (t) et Δ/Σ (t) sont synchrones des impulsions reçues.

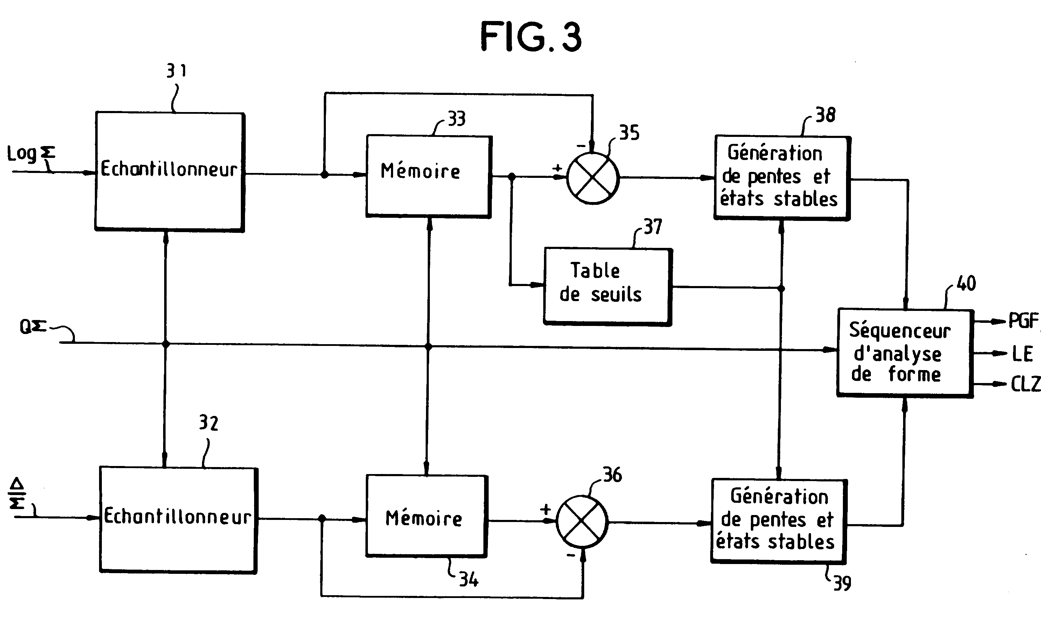

La figure 3 présente le synoptique d'un mode de réalisation possible d'un dispositif pour la mise en oeuvre du procédé selon l'invention. Le signal issu de la voie somme et des amplificateurs logarithmiques Log Σ (t), attaque un premier circuit échantillonneur 31 dont la sortie est couplée à l'entrée principale d'une mémoire 33 et à l'entrée négative d'un soustracteur 35. La sortie de la mémoire 33 est reliée à l'entrée positive du soustracteur 35. L'échantillonneur 31 permet d'échantillonner en plusieurs points, l'amplitude à l'intérieur d'une impulsion Log Σ (t). Les valeurs échantillonnées sont par exemple mémorisées par la mémoire 33. Le soustracteur 35 permet, par différence entre les valeurs échantillonnées mémorisées par la mémoire 33 et celles en sortie de l'échantillonneur 31, de détecter la présence d'ondulations dans l'impulsion Log Σ (t). A cet effet, la sortie du soustracteur 35 est reliée à un premier circuit de génération 38 de pentes et d'états stables dans l'impulsion reçue. Cette génération est fonction des écarts entre les amplitudes des échantillons reçus du soustracteur 35 et par exemple d'une information de seuil issue d'une mémoire 37 contenant une table de seuils reliée à la sortie de la première mémoire 33 et au premier circuit 38 de génération de pentes et d'états stables 38.

De façon analogue au signal de puissance Log Σ (t), le signal d'écartométrie Δ/Σ(t) issu des voies somme et différence du radar secondaire, attaque un deuxième échantillonneur 32 dont la sortie est reliée à l'entrée principale d'une deuxième mémoire 34 et à l'entrée négative d'un deuxième soustracteur 36. La sortie de la deuxième mémoire 34 est reliée à l'entrée positive du deuxième soustracteur 36. La sortie du deuxième soustracteur 36 est reliée à un deuxième circuit 39 de génération de pentes et d'états stables dans l'impulsion reçue, ce deuxième circuit 39 étant par ailleurs relié à la mémoire 37 contenant une table de seuils. La génération de pentes et d'états stables dans l'impulsion reçue est fonction des écarts entre les échantillons reçus du deuxième soustracteur 36 et d'informations de seuils contenues dans la mémoire 37. Un circuit de séquencement et d'analyse de forme 40 relié aux sorties des circuits de génération de pentes et d'états stables 38, 39 est commandé par le signal QΣ. Ce circuit 40 exploite pendant la durée du signal QΣ la succession des signaux de pentes et d'états stables issus des circuits 38, 39 auxquels il est relié, afin d'établir par exemple trois signaux logiques notés LE, CLZ et PGF.

Le signal LE peut être par exemple une impulsion de largeur égale à environ 50 ns. Il peut définir notamment le front avant des impulsions reçues. En cas de garbling total entre deux impulsions reçues, le circuit de séquencement et d'analyse de forme peut générer par exemple deux signaux LE successifs sur le front montant du signal QΣ.

Le signal CLZ peut indiquer la présence d'états stables dans une impulsion reçue. En cas de garbling, il peut par exemple passer à l'état 0 pour indiquer qu'on ne peut affecter de valeur aux impulsions Log Σ ou Δ/Σ.

En cas de garbling partiel entre deux impulsions reçues, un premier signal LE peut par exemple être généré sur le front montant du signal QΣ pour indiquer la position de la première impulsion reçue et un second signal LE peut être généré suite à la détection d'une variation de pentes par le circuit de séquencement et d'analyse de forme 40, les pentes sont issues des circuits de génération de pentes et d'états stables 38, 40 et la variation de l'une d'elles indique la présence d'une deuxième impulsion reçue, le début de la variation indiquant la position de cette deuxième impulsion. Pendant l'absence de garbling, le signal CLZ passe par exemple à l'état 1 et dès la présence d'un garbling, c'est-à-dire ici de la deuxième impulsion, le signal CLZ passe à 0.

Le signal PGF indique s'il y a la présence d'un garbling total, c'est-à-dire si deux impulsions reçues sont totalement superposées. Le signal PGF combine les informations contenues par les signaux LE et CLZ. Par exemple PGF = 1 peut indiquer la présence d'un garbling total et PGF =0 que le garbling est partiel ou qu'il n'y a pas de garbling.

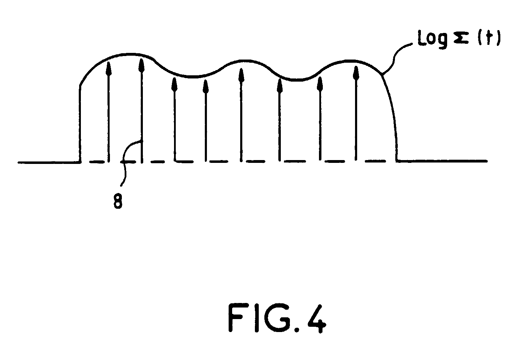

La figure 4 explicite l'échantillonnage à l'intérieur d'une impulsion du signal Log Σ (t). En cas d'ondulation, les amplitudes des échantillons 8 ne convergent pas dans une certaine fourchette, définie par exemple par la table de seuils 37. Le principe d'échantillonnage est le même pour le signal Δ/Σ (t).

L'efficacité du procédé selon l'invention, utilisant la détection d'ondes superposées aux impulsions reçues est particulièrement associée à l'écart de fréquence entre les transpondeurs des avions délivrant leurs signaux de réponses, cet écart devant être suffisant, par exemple supérieur à 1 MHz environ. Néanmoins, les traitements des signaux Log Σ (t) et Δ/Σ (t) étant complémentaires en fonction de la puissance des transpondeurs ou de leur écart azimutal, les cas couverts sont nombreux et l'efficacité obtenue satisfaisante, et en tous cas nettement supérieure à celle des méthodes antérieures.

L'invention peut aussi être utilisée par exemple dans les applications des circuits d'extraction de réponse Mode S, cas où les adressages des transpondeurs sont sélectifs, cette sélection n'empêchant pas l'apparition de garblings. Plus généralement, l'invention peut s'appliquer à tout système d'extraction susceptible de recevoir des signaux mélangés.

**Revendications**

1.  Procédé de détection de mélanges d'impulsions reçues par un radar secondaire à antenne de réception monopulse permettant d'obtenir un signal impulsionnel de puissance (Log Σ (t)) et un signal impulsionnel d'écartométrie (Δ/Σ (t)) synchrones des impulsions reçues, caractérisé en ce qu'il consiste à détecter à la fois des ondulations superposées au signal de puissance (Log Σ (t)) et des ondulations superposées au signal d'écartométrie (Δ/Σ (t)), la présence d'au moins deux impulsions mélangées (5, 6) étant détectée par la présence d'ondulations sur au moins un des deux signaux (Log Σ (t)), (Δ/Σ (t)).

2. Procédé selon la revendication 1, caractérisé en ce que les amplitudes du signal de puissance (Log Σ (t)) et du signal d'écartométrie (Δ/Σ (t)) sont échantillonnées en plusieurs points à l'intérieur d'une impulsion de ces signaux, le mélange d'au moins deux impulsions mélangées (5, 6) étant détecté par l'absence de convergence des échantillons d'amplitude (8) à l'intérieur d'une fourchette.

3. Procédé selon la revendication 2, caractérisé en ce que la fourchette est réglable.

4. Procédé selon l'une quelconque des revendications 2 ou 3, caractérisé en ce que l'échantillonnage du signal de puissance (Log Σ (t)) et du signal d'écartométrie (Δ/Σ (t)) est commandé par un signal de détection d'impulsions reçues (3,QΣ).

5. Procédé selon la revendication 4, caractérisé en ce que le signal de détection (3,QΣ) détecte les impulsions reçues à la moitié de leur amplitude maximum.

6. Procédé selon l'une quelconque des revendications 2 à 5, caractérisé en ce que les échantillons (8) sont mémorisés.

7. Dispositif pour la mise en oeuvre du procédé selon l'une quelconque des revendications précédentes, caractérisé en ce qu'il comprend:

   - un premier échantillonneur (31) dont l'entrée est relié au signal de puissance (Log Σ (t)) et la sortie à l'entrée principale d'une première mémoire (33) et à l'entrée négative d'un premier soustracteur (35), les entrées de contrôle du premier échantillonneur et de la première mémoire (33) étant reliées au signal de détection d'impulsions (QΣ), la sortie de la première mémoire (33) étant reliée à l'entrée positive du soustracteur (35) ;
   - un premier circuit (38) de génération de pentes et d'états stables dont l'entrée est reliée à la sortie du premier soustracteur 35;
   - un deuxième échantillonneur (32) dont l'entrée est reliée au signal d'écartométrie (Δ/Σ (t)) et la sortie à l'entrée principale d'une deuxième mémoire (34) et à l'entrée négative d'un deuxième soustracteur (36), les entrées de contrôle du deuxième échantillonneur (32) et de la deuxième mémoire (34) étant reliées au signal de détection d'impulsions (QΣ), la sortie de la deuxième mémoire (34) étant reliée à l'entrée positive du deuxième soustracteur (36);
   - un deuxième circuit (39) de génération de pentes et d'états stables dont l'entrée est reliée à la sortie du deuxième soustracteur (36);
   - un circuit (40) de séquencement et d'analyse de forme dont une première entrée est reliée à la sortie du premier circuit (38) de génération de pentes et d'états stables, une deuxième entrée est reliée au deuxième circuit (39) de génération de pentes et d'états stables et une troisième entrée est reliée au signal de détection d'impulsion (QΣ);
   - une mémoire (37) contenant une table de seuils dont l'entrée est reliée à la sortie de la première mémoire (33) et la sortie est reliée aux circuits (38, 39) de générations de pentes et d'états stables.

## Patentansprüche

1. Verfahren zur Erfassung von Impulsgemischen, die von einem Sekundärradargerät mit Einzelimpuls-Empfangsantenne empfangen werden, wobei dieses Radargerät ein impulsförmiges Leistungssignal (LogΣ(t)) und ein impulsförmiges Abstandssignal (Δ/Σ(t)) bilden kann, die mit den empfangenen Impulsen synchron sind, dadurch gekennzeichnet, daß es darin besteht, sowohl die dem Leistungssignal (LogΣ(t)) als auch dem Abstandssignal (Δ/Σ(t)) überlagerten Schwebungen zu erfassen, wobei das Auftreten von mindestens zwei vermischten Impulsen (5, 6) durch Schwebungen in mindestens einem dieser Signale (LogΣ(t); Δ/Σ(t)) erkannt wird.

2. Verfahren nach Anspruch 1, dadurch gekennzeichnet, daß die Amplituden des Leistungssignals (LogΣ(t)) und des Abstandssignals (Δ/Σ(t)) an mehreren Punkten innerhalb eines Impulses dieser Signale getastet werden und daß das Vorliegen mindestens zweier vermischter Impulse (5, 6) durch die nicht vorhandene Konvergenz der Amplitudensignale (8) innerhalb eines Bereichs erkannt wird.

3. Verfahren nach Anspruch 2, dadurch gekennzeichnet, daß der Bereich regelbar ist.

4. Verfahren nach einem beliebigen der Ansprüche 2 oder 3, dadurch gekennzeichnet, daß die Tastung des Leistungssignals (Log$\Sigma$(t)) und des Abstandssignals ($\Delta/\Sigma$(t)) durch ein Signal zur Erfassung von empfangenen Impulsen (3, Q$\Sigma$) gesteuert wird.

5. Verfahren nach Anspruch 4, dadurch gekennzeichnet, daß das Erfassungssignal (3, Q$\Sigma$) die empfangenen Impulse bei der Hälfte ihrer Maximalamplitude diskriminiert.

6. Verfahren nach einem beliebigen der Ansprüche 2 bis 5, dadurch gekennzeichnet, daß die Tastproben (8) gespeichert werden.

7. Vorrichtung zur Durchführung des Verfahrens nach einem beliebigen der vorhergehenden Ansprüche, dadurch gekennzeichnet, daß sie enthält:

   - eine erste Tastschaltung (31), deren Eingang das Leistungssignal (Log$\Sigma$(t)) empfängt und deren Ausgang an den Haupteingang eines ersten Speichers (33) und an den negativen Eingang eines ersten Subtrahierglieds (35) angeschlossen ist, wobei die Steuereingänge der ersten Tastschaltung und des ersten Speichers (33) das Impulserkennungssignal (Q$\Sigma$) empfangen und der Ausgang des ersten Speichers (33) an den positiven Eingang des ersten Subtrahierglieds (35) angeschlossen ist;
   - eine erste Schaltung (38) zur Erzeugung von Übergängen und stabilen Zuständen, deren Eingang an den Ausgang des ersten Subtrahierglieds (35) angeschlossen ist,
   - eine zweite Tastschaltung (32), deren Eingang das Abstandssignal ($\Delta/\Sigma$(t)) empfängt und deren Ausgang an den Haupteingang eines zweiten Speichers (34) und an den negativen Eingang eines zweiten Subtrahierglieds (36) angeschlossen ist, wobei die Steuereingänge der zweiten Tastschaltung (32) und des zweiten Speichers (34) das Impulserkennungssignal (QS) empfangen und der Ausgang des zweiten Speichers (34) an den positiven Eingang des zweiten Subtrahierglieds (36) angeschlossen ist,
   - eine zweite Schaltung (39) zur Erzeugung von Übergängen und stabilen Zuständen, deren Eingang an den Ausgang des zweiten Subtrahierglieds (36) angeschlossen ist,
   - eine Schaltung (40) zur Ablaufsteuerung und Formanalyse, die mit einem ersten Eingang an den Ausgang der ersten Schaltung (38) zur Erzeugung von Übergängen und stabilen Zuständen, mit einem zweiten Eingang an die zweite Schaltung (39) zur Erzeugung von Übergängen und stabilen Zuständen und mit einem dritten Eingang an das Impulserkennungssignal (QS) angeschlossen ist,
   - einen Speicher (37) der eine Tabelle von Schwellwerten enthält und dessen Eingang an den Ausgang des ersten Speichers (33) angeschlossen ist, während sein Ausgang mit den Schaltungen (38, 39) zur Erzeugung von Übergängen und stabilen Zuständen verbunden ist.

## Claims

1. Method of detecting mixing of pulses received by a secondary radar with a monopulse receiving antenna making it possible to obtain a pulsed power signal (Log$\Sigma$(t)) and a pulsed angular offset signal ($\Delta/\Sigma$(t)) which are synchronous with the received pulses, characterized in that it consists in detecting both the undulations superimposed on the power signal (Log$\Sigma$(t)) and undulations superimposed on the angular offset signal ($\Delta/\Sigma$(t)), the presence of at least two mixed pulses (5, 6) being detected by the presence of undulations on at least one of the two signals (Log$\Sigma$(t)), ($\Delta/\Sigma$(t)).

2. Method according to Claim 1, characterized in that the amplitudes of the power signal (Log$\Sigma$(t)) and of the angular offset signal ($\Delta/\Sigma$(t)) are sampled at several points within one pules of these signals, the mixing of at least two mixed pulses (5, 6) being detected by the absence of convergence of the amplitude samples (8) within a bracket.

3. Method according to Claim 2, characterized in that the bracket is adjustable.

4. Method according to either of Claims 2 and 3, characterized in that the sampling of the power signal (Log$\Sigma$(t)) and of the angular offset signal ($\Delta/\Sigma$(t)) is controlled by a received-pulse detection signal (3,Q$\Sigma$).

5. Method according to Claim 4, characterized in that the detection signal $(3,Q\Sigma)$ detects the pulses received at half of their maximum amplitude.

6. Method according to any one of Claims 2 to 5, characterized in that the samples (8) are stored in memory.

7. Device for implementing the method according to any one of the preceding claims, characterized in that it comprises:

- a first sampler (31), the input of which is linked to the power signal $(Log\Sigma(t))$ and the output to the main input of a first memory (33) and to the negative input of a first subtracter (35), the control inputs of the first sampler and of the first memory (33) being linked to the pulse detection signal $(Q\Sigma)$, the output of the first memory (33) being linked to the positive input of the subtracter (35);
- a first circuit (38) for generating slopes and stable states, the input of which is linked to the output of the first subtracter (35);
- a second sampler (32), the input of which is linked to the angular offset signal $(\Delta/\Sigma(t))$ and the output to the main input of a second memory (34) and to the negative input of a second subtracter (36), the control inputs of the second sampler (32) and of the second memory (34) being linked to the pulse detection signal $(Q\Sigma)$, the output of the second memory (34) being linked to the positive input of the second subtracter (36);
- a second circuit (39) for generating slopes and stable states, the input of which is linked to the output of the second subtracter (36);
- a sequencing and shape-analysis circuit (40), a first input of which is linked to the output of the first circuit (38) for generating slopes and stable states, a second input of which is linked to the second circuit (39) for generating slopes and stable states and a third input of which is linked to the pulse detection signal $(Q\Sigma)$;
- a memory (37) containing a threshold table, the input of which is linked to the output of the first memory (33) and the output of which is linked to the circuits (38, 39) for generating slopes and stable states.

FIG.1a

FIG.1b

FIG.2

FIG.3

Log Σ (t)

8

# FIG.4